# EUROPEAN PATENT APPLICATION

(11) **EP 4 657 180 A1**
(43) Date of publication of application: **03.12.2025**
(21) Application number: 24178209.3
(22) Date of filing: 27.05.2024
(51) Int. Cl.: G05B 15/02

(54) **METHOD FOR OBTAINING CONFIGURATION DATA INDICATIVE OF A SYSTEM CONFIGURATION OF A SYSTEM FOR ONE OR MORE BUILDINGS**

(71) Applicant: ABB SCHWEIZ AG, 5400 Baden (CH)
(72) Inventor: BORRISON, Reuben, 68782 Brühl (DE); DIX, Marcel, 78476 Allensbach (DE); ALEKSY, Markus, 67065 Ludwigshafen (DE)
(74) Representative: Maiwald GmbH

(57) **Abstract**

The disclosure relates to a method (100) for obtaining configuration data (66) indicative of a system configuration of a system (22, 70) for one or more buildings (10), the method (100) comprising:
- obtaining building data (63) of the one or more buildings (10);
- obtaining instruction data (65) comprising one or more instructions for processing the building data (63) by an Al processing component (44) for obtaining the configuration data (66);
- providing the building data (63) and the instruction data (65) for processing by the Al processing component (44); and
- obtaining the configuration data (66) based on the building data (63) and the instruction data (65) from the processing by the Al processing component (44).

## Description

### TECHNICAL FIELD

The present invention relates to a method for obtaining configuration data indicative of a system configuration of a system for one or more buildings, one or more computer program products, and a data processing system.

### BACKGROUND

Building management systems, BMS or MS, and other systems in the form of applications are being used for management of a variety of buildings, including commercial and residential buildings. Particularly for commercial buildings such as but not limited to, for example, office buildings, retail buildings, hospitality buildings, such as hotels and movie theatres, healthcare buildings, such as hospitals and clinics, educational buildings, such as schools and universities, and industrial buildings, such as factories, workshops, buildings may utilize a MS and other thereto related systems. All of these examples of buildings comprise several devices, in particular electrical devices of some sort, such as but not limited to, for example, sensors, control units, in particular actuators, and other devices or components, which are being used in the buildings to provide comfort to the users of the buildings, to enable fulfilling the function of the buildings and similar.

For example, typically, commercial buildings are supplied with different kinds of technical systems, e.g., Heating, Ventilation and/or Air Conditioning, HVAC, systems for which different sensors, e.g., temperature sensors, and control units, e.g., temperature control units, and actuators, e.g., pumps, valves, etc. are being used. These are distributed spatially throughout the building, in particular in different rooms and on different floors thereof. Additionally, commercial buildings are often supplied with many different kinds of systems such as but not limited to lighting systems, e.g., including lighting control units, lighting devices, etc., electrical systems, e.g., electricity control units, electrical sockets, access control systems, security and alarm systems, shading and glazing systems, and many different kinds of systems for ensuring comfort of the users of the buildings and/or for ensuring that a function or purpose of the building is met.

Generally, the MS serves the purpose of managing or controlling the technical systems of the building. All of the aforementioned technical systems may have hundreds, thousands or more devices, in particular electrical devices, inside a building, which may be required to be managed or, in other words, controlled depending on the size and type of the building. Thus, the MS may control the operation of thousands of control units such as actuators, sensors, and similar based on different user input, schedules, measurements or sensor readings and so on. A building controlled by a MS is often referred to as an intelligent building or a smart building. Also known as building automation systems, BAS, or building energy management systems, BEMS, the MS may be the semi or fully automated centralized control of a building's HVAC, electrical, lighting, shading, access control, security systems, and other, potentially interrelated, technical systems of the building. The objective of the MS may thus be, for example, improved occupant comfort, efficient operation of the technical systems, reduction in energy consumption, reduced operating and maintaining costs and increased security. For example, the MS may functionality keep a building's climate within a specified range, provide light to rooms based on occupancy, monitor performance and device failures, and provide malfunction alarms to building maintenance staff. The MS may operate to reduce building energy and maintenance costs compared to a non-controlled building.

Most commercial buildings built after 2000 include a MS, whilst older buildings may be retrofitted with a new MS. There are many different providers of building management systems and most buildings have a completely different MS depending on their design and the provider. Different MS may use completely different information models, IM, or no IM at all. Different MS may have completely different data, in particular when it comes to the mapping or data structure of how the different technical systems and the devices thereof are connected with one another physically, spatially within the building, logically, e.g., in terms of their control and operational relationship to one another, and virtually. Also, different MS may have different capabilities or functions. For example, one MS of a building may have energy consumption monitoring as a capability, while another one may not have such capability or feature.

Besides the BMS or MS itself, there may be other systems for the one or more buildings, which may be part of the MS or not, as mentioned above. Such systems may be embedded or provided in the form of digital applications. These digital applications may serve various purposes in addition to or as alternative to the MS control of the technical systems, e.g., control user comfort based on occupancy detection, or provide technical information associated therewith, e.g., monitoring of energy consumption of the technical systems. One reason such other systems may be additionally or alternatively provided to the MS is that the MS may not provide the capability or that the capabilities of the MS are outdated. Hence, another system in form of a digital application may be provided to make use thereof. The other system, in particular digital application, may still be linked to the MS and/or the technical systems of the one or more buildings for deriving data therefrom, e.g., for monitoring the energy consumption, and/or for controlling the technical systems or its entities, e.g., for user comfort control based on occupancy detection, which may not be provided by the MS by itself.

Thus, when a building is modernized, retrofitted with a new MS, a MS shall be updated, or an additional system is to be used for an existing building, there may be a need to update the MS or provide such additional system or application. The modernization or retrofitting of the MS or the provision of an additional system may include the installment or commissioning of the new systems, e.g., in the form of software or application products, as well as new hardware in the building. Typically, a configuration management is required by a system integrator or installer, who needs to configure the MS system or additional systems, e.g., including an interface such as a dashboard, for the MS system or additional systems. The required configurations may be lengthy and many different requirements based on data of the building, e.g., data from the MS, may have to be considered. Hence, the configuration management may be very complex, time-consuming and, most particularly, prone to errors, which may render the new MS or any additional system unusable and thus cause malfunctions in the management or, in other words, control of the building.

### SUMMARY

The above problem or need is at least partially solved or alleviated by the subject matters of the independent claims of the present disclosure, wherein further examples are incorporated in the dependent claims.

According to an aspect of the present disclosure, there is provided a method for obtaining configuration data indicative of a system configuration of a system for one or more buildings, the method comprising:
- obtaining building data of the one or more buildings;
- obtaining instruction data comprising one or more instructions for processing the building data by an Artificial Intelligence, Al, processing component for obtaining the configuration data;
- providing the building data and the instruction data for processing by the AI processing component; and
- obtaining the configuration data based on the building data and the instruction data from the processing by the AI processing component.

Hence, the present invention provides for obtaining configuration data for use as a system configuration of a system, e.g., a building management system or any other system of the one or more buildings, by using an AI processing component (also referred to as artificial intelligence processing component) and providing to it the building data and the instruction data to return the configuration data. As building data, herein, any data may be understood that relates to the technical information of the one or more buildings, which may need to be considered to generate technically valid configuration data. In other words, the building data may be indicative of the technical information of the one or more buildings. The instruction data may be configured such that it includes one or more instructions for the AI processing component regarding the expected result of its processing, namely the configuration data. For example, the one or more instructions can comprise or indicate other exemplary or previous configuration data, which may or may not have been generated by an AI processing component, such that the AI processing component knows how the configuration data is to be structured, what form it is supposed to have, etc. Given the capabilities of artificial intelligence, Al, model, in particular based on machine learning and/or large language models, LLM, it may be possible to transform the building data based on the configuration data with accurate results and accuracy in terms of the technical relationships and understanding into the configuration data. For example, if one instruction is that the configuration data shall provide a system configuration, e.g., in the form of or for a digital application, for energy consumption monitoring, than based on the building data, the AI processing component may generate configuration data for such application, e.g., as a separate digital application of the MS or as an application thereof. Specifically, AI models, including ML models, may understand or at least decipher the natural language of the building data, together with instructions on how to process them, technically structurize them more accurately to reflect the actual building setup with its technical system, e.g., where the different devices are located, how they are operatively connected to each other, what there setpoints are, etc., for providing accurate configuration data, which may be used for a system configuration of the MS or another system, in particular in the form of a digital application.

Generally, as exemplary explained above, the configuration data is indicative of a system configuration for a system for one or more buildings, which may include the MS or any other system. This may mean that the configuration data may be used to provide the system configuration of the system. That is, when the system uses the configuration data, it may be configured according to the configuration data, i.e., with the system configuration. For example, in case the system is or executes a digital application, using the configuration data in the system or for execution, will provide the digital application with the system configuration and, for example, its functions or capabilities. Generally, the configuration data may be in the form of text, e.g., natural language. At least partially or entirely, the configuration data or system configuration may be in the form of program code or computer code, e.g., of a digital application or for executing a digital application. Alternatively, or additionally, at least partially, the configuration data may be in the form of input information to be used by an existing program code or computer code, which may already be included in the respective system, in which it shall be used. Further, in particular, the configuration data may comprise text based artificats. These may enable the respective system, for which the configuration data or based thereon the system configuration is being used, to function as expected. Accordingly, when the configuration data or system configuration is provided to the system or as a new system of the one or more buildings, it may provide certain capabilities or functions, which may not have been previously provided for the one or more buildings by the existing systems or which may be enhanced. The capabilities or functions may be provided based on the instruction data, which may indicate which capabilities or functions are to be provided by the configuration data, i.e., when the system, e.g., digital application uses the configuration data. Also, the type of data, e.g., program code, may be defined by the instruction data, as it instructs the AI processing component to provide, e.g., a program code as output thereof.

The method of the first aspect may in particular be an at least partially or fully computer implemented method. This means that at least one, multiple or all of the steps of the method may be carried out by a data processing system, which may comprise one or more data processing apparatuses, which may be in the form of computers or computing units, which may comprise one or more processors and data storages or memories. Different steps may be carried out by the same or by different data processing apparatuses of the data processing system.

In an example, the building data may be indicative of information associated with entities of or for the one or more buildings. The information associated with the entities may for example relate at least to one or more of: a location of the entities, a type of the entities, a status of the entities, a usage of the entities, a function of the entities, a size of the entities, or a relationship between the entities. The entities may be physical entities, virtual entities and/or logical entities, for example. The information associated therewith may describe the entities in terms of their physical, virtual and/or logical characteristics or properties. Physical entities may be anything having a physical presence in the one or more buildings, e.g., objects, devices, components and similar as herein described. Examples are mechanical systems or devices thereof, such as air handling units, luminaires, variable air volume boxes. Other examples are lighting systems and lighting units or devices thereof, such as light switches, light sources, and similar. Other examples are networked devices like electric meters, thermostats and electrical vehicle chargers. Yet other examples are spatial elements like rooms and floors. Virtual entities may be anything whose representation is based in software or a computer program, as may be stored on a data storage. Examples are sensing and status points which allow software to read the current state of the one or more buildings (such as the value of a temperature sensor, the energy consumption of a space heater, or the speed of a fan), and actuation points which allow software to write values (such as temperature setpoints or the brightness of a lighting fixture). Logical entities may be those entities or collections of entities that may be defined by one or more rules, in particular a set of rules. Examples may be HVAC zones and lighting zones. Also, any concepts such as class names, tags and relationships may fall into this category. A tag may be an attribute of an entity. Examples of tags may be sensor, setpoint, air, water, discharge, and leaving. A class may be a named category with intentional meaning, e.g., a definition, used for grouping entities. Classes may be organized in hierarchies, and entities may be instances of one or more classes. Classes may also have a set of associated tags, which may provide helpful annotations for discovery. A relationship may define the nature of a link between two entities, such as for example a control or operational relationship between different physical entities, e.g., a light switch and a light source. Examples of relationships are encapsulation (one entity is contained within another), sequence (one entity takes effect before another in some process) and instantiation (one entity's type is given by another entity). Other examples of relationships is "location" / "is located in" or "feeds / is fed by".

In an example, the entities may be at least one or more of: Heating, Ventilation and/or Air Conditioning, HVAC entities, lighting entities, electrical entities, spatial entities, sensor entities, and control entities, in particular actuator entities. For example, a spatial entity may be a physical space, e.g., a room, floor or similar. For example, a lighting entity may be a light switch, light source, or similar. Logical and/or virtual entities may provide information or relationships associated with the different physical entities with one another. For example, the building data may contain information associated with a physical entity, e.g., that it is in the form of a light source and that it is located inside a specific room. Multiple or all of HVAC system, lighting system, electrical system, spatial system, sensor system and control system, and the information associated therewith, may be included in the building data, thus allowing the configuration system to operate and/or control multiple or all of these systems and, for using the configuration data to update the MS or to be used for another system or application in relation to the one or more buildings, e.g., to provide another application or system on top or in addition of the MS for optimizing the energy management of the one or more buildings, in particular, when there is no or only poor energy management optimization in the current MS, for example. Alternatively, for example, the MS or another system or application may be using the configuration data for anomaly detection of the MS or forecasting energy consumption for different scenarios, e.g., exchange of devices or addition of new devices, for example, for reducing the energy consumption of the one or more buildings.

In an example, the building data may be indicative of at least parts of an information model. In particular, the information model may be a building information model. In any case, the information model may be understood as digital data and/or used for a digital representation of the one or more buildings with all of its technical systems. The information model or generally the building data may have any form, such as but not limited to, text, e.g., natural language, computer code, data tables, structurized data, functions, diagrams, graphs, e.g., illustrating the relationship between devices or entities of the building, and/or similar, and the digital representation may be provided based thereon or be reflected thereby. In particular, the building data or its information model may be digital data and/or, in particular indicative of, a digital representation of physical and functional characteristics of entities or objects, devices or components used in the planning, designing, construction, operation, and/or maintenance of the one or more building. Hence, the building data or information model may generally be used in the full lifecycle management of a building and its components within its technical systems. Specifically in the context of this disclosure, typically, the one or more buildings are already existing such that the building management system, MS, may already be used or operating, hence the digital representation would typically be used for the operation and/or maintenance of the one or more buildings. Building data or the information model may be stored as one or more computer readable files and used by one or more systems such as but not limited to the MS or other systems or applications. The building data may contain holistic data exclusive to the components or devices of the buildings, which can be used for a variety of purposes and in a variety of systems or applications, such as but not limited to controlling occupant or user comfort inside the building, efficient operation of the technical systems, reduction in energy consumption, reduced operating and maintaining costs, increased security, geometry for spacing calculations, power or safety ratings, energy declaration of standard conformity and more. The MS may alternatively be referred to as a building automation system, BAS, or building energy management system, BEMS. The MS may be the semi or fully automated centralized control of a building's technical systems.

In an example, the information model may be indicative of a digital representation of the entities and of the therewith associated information. The digital representation may be visualized in a corresponding software executed by a data processing apparatus and one or more displays of the data processing apparatus. Hence, the building data may be a comprehensive or holistic overview of all entities and the therewith associated information, e.g., their physical, virtual and/or logical characteristics. Hence, any application or system, such as but not limited to the MS, may make use of the building data to control the technical systems of the one or more buildings, in particular for operation and/or maintenance of the one or more buildings.

In an example, the digital representation may be in the form of one or more ontologies. The ontology or ontologies may be in the form of any one of a graph, a tree representation or any other representation or information model description type, for example. A graph may be an abstract organizational data structure. It may represent a set of entities, such as the ones described herein, in particular but not only the physical entities, as nodes. It may represent relationships between the physical entities, e.g., the virtual entities and/or logical entities as edges or in other form. However, the nodes may also be representing the virtual entities and/or logical entities depending on the structure of the graph. Different kinds of graphs may be used, one example being the Brick Ontology. A Brick graph may be represented by a directed, labelled graph. Another example of a kind of ontology is Haystack.

In an example, the method may further comprise obtaining regulation data indicative of one or more regulations for the one or more buildings and providing it with the building data and the instruction data for processing by the AI processing component. The regulation data may for example relate to or comprise rules as regulation, relating to technical requirements of the one or more buildings and/or the system configuration as such. Moreover, or alternatively, the one or more regulations may be or relate to law, in particular law relating to buildings, but not only, e.g., also other law areas such as data protection law or regulations, such that it is ensured that the configuration data is legally valid. For example, if the configuration data is generated for energy monitoring of the one or more buildings by a digital application, there may be certain requirements from the side of rules and/or laws governing the energy monitoring such that the energy monitoring is accurate and/or according to the law. By including such regulation data in the processing of the AI processing component, technical and/or legal compliance of the configuration data, in particular for a specific application as herein exemplary described, may be achieved.

In an example, the method may further comprise using the configuration data for a system configuration of a building management system and/or another system of the one or more buildings. Hence, the method may comprise the actual usage of the configuration data for a system configuration of one or more systems of the one or more buildings. This may mean that an existing system configuration of the MS or other system is overwritten or a new one is added, for example. Such new configuration may provide new capabilities as explained herein, for example.

In an example, the other system may be a digital application relating to the one or more buildings. In other words, the digital application may be for or of the one or more buildings. It may be executed on a data processing apparatus to provide different capabilities or functions as described herein, which may, for example, not be provided by the current systems, e.g., digital applications and/or MS, of the one or more buildings or the same capabilities or functions, but in an improved way compared to, e.g., outdated capabilities or functions of existing systems of the one or more buildings.

In an example, the digital application may be configured for at least one of energy consumption monitoring, energy forecasting, energy optimization, regulation control, or user comfort control. Energy consumption monitoring relates to the case where the digital application monitors the energy consumption of the one or more buildings. Energy forecasting relates to the case where based on different conditions the energy consumption is forecast by the digital application. For example, the different conditions may relate to an inside or outside of the one or more buildings, e.g., an increased interior temperature of the building or a low outside temperature, or to a change of the hardware configuration, e.g., a new central heating of the building. Energy optimization may relate to the case where the digital application suggests areas of improvement in the one or more buildings for reduced energy consumption. Regulation control may relate to the case where a regulation, e.g., law, such as a maximum or minimum indoor temperature, may be complied with by means of control of one or more technical systems of the building by the digital application. User comfort control may relate to the case where the digital application controls the user comfort, e.g., the indoor temperature in occupied rooms based on occupancy detection. Of course, other digital application configurations, in particular any other herein mentioned, are additionally or alternatively possible.

In an example, the AI processing component may be a generative AI processing component based on at least one Large Language Model, LLM. The generative AI processing component may be implemented in or provided as software and executed on the same data processing apparatus as the one which may be executing the method of the first aspect or on a different one or several different ones, for example. For example, the AI processing component may be executed on distant or remote servers, which may have increased data processing capabilities and storages for storing one or more LLMs. Alternatively, these may be locally stored and executed. The generative AI processing component may be trained with or based on any LLM, e.g., general LLM and/or LLM specific for configuration data. Hence, the generative AI processing component may be any generative AI processing component such as provided by OpenAI, Microsoft, Google and others, e.g., ChatGPT, Google Gemini or Bard, and similar. Or, alternatively, the generative AI processing component may be trained with or based on open source LLMs, for example. The generative AI processing component may advantageously process all content of the building data and/or the regulation data provided as or interpretable as or convertible to natural language.

In an example, the one or more instructions may be in the form of prompts. Prompts are specific instructions for AI processing components on how to handle the data provided together with the instructions, i.e., the building data and/or the regulation data. In particular, a prompt may define the expected result of the processing of the building data and/or the regulation data by the AI processing component. For example, the prompt may define or request from the AI processing component that the expected result is standardized configuration data for use in or as a system configuration.

In an example, the system configuration may comprise an interface for user access. Thereby, the system configuration may be accessed by a user for, e.g., using any of the capabilities provided by one or more of the digital application or the MS, for example. Hence, the user may provide user input for, for example, using energy forecasting of a digital application with the provided system configuration, wherein the user input contains the information required for the energy forecasting, e.g., for which different conditions the energy consumption is to be forecast by the digital application. The interface may for example be in the form of a dashboard, which may be displayed on a display of a data processing apparatus executing the digital application.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a building with a building management system;
Figure 2 shows a data processing system;
Figure 3 shows a computer program with its elements;
Figure 4 shows a method for obtaining configuration data indicative of a system configuration of a system for the building of Fig. 1; and
Figure 5 shows a digital representation of the building data in the form of a graph.

The Figures are schematic only and not true to scale. In principle, identical or like parts, elements and/or steps are provided with identical or like reference numerals in the Figures.

### DETAILED DESCRIPTION OF THE INVENTION

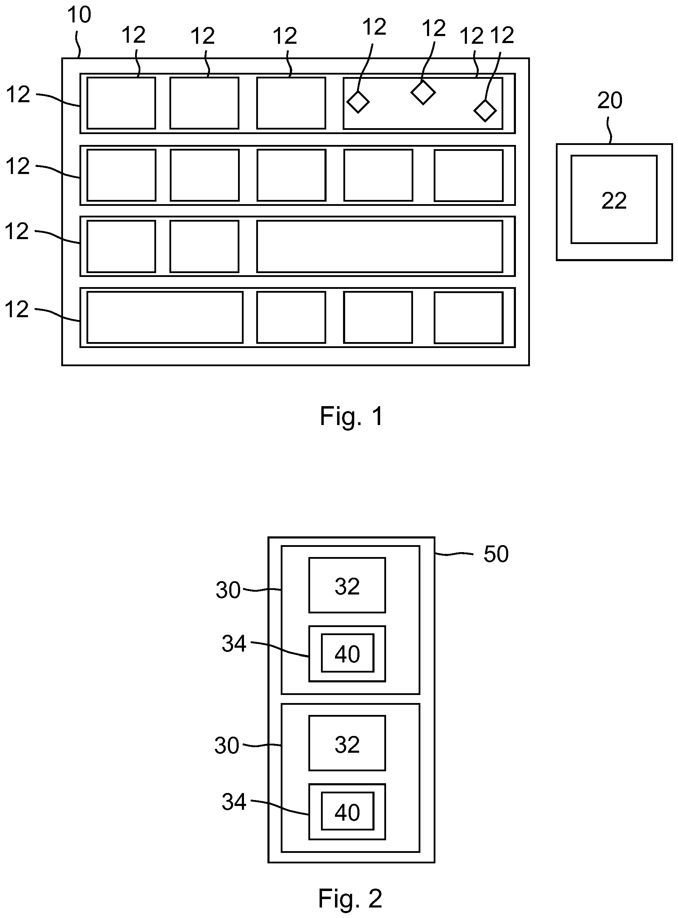

Figure 1 schematically shows an exemplary building 10, e.g., in the form of a residential or commercial building. The building 10 is shown with several entities 12, in particular physical entities 12, which may be in the form of spaces such as floors (see vertically stacked large rectangular structures) and rooms on the floors (see horizontally aligned rectangular structures inside the structures of the floors), and devices or components as herein described on the floors or inside the rooms (see diamond shaped entities 12 in the top right room of the building). The number, size, location, etc. of the entities 12 shown herein is merely exemplary to illustrate the general concept.

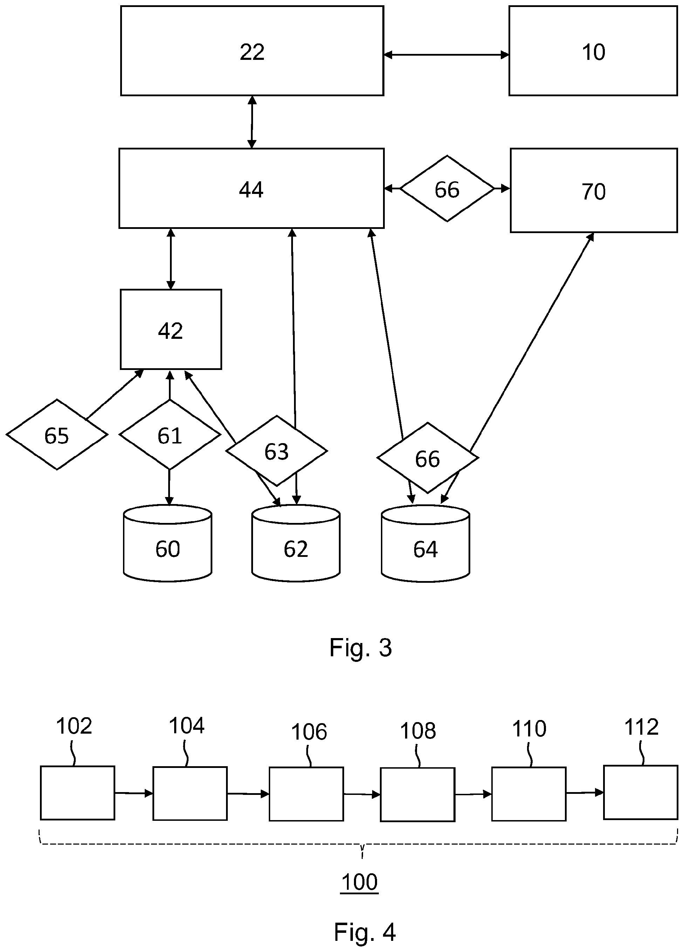

A building management system, MS, 22 is shown exemplary to the right of the building 10 in Fig. 1. The MS 22 may be implemented in hardware and/or software, meaning that the MS 22 may be a data processing system 20 executing a software, thereby providing the MS 22 or, alternatively, the MS 22 may be the software as such and as shown in Fig. 1, and as may be executed by the data processing system 20. In any case, the MS 22 is configured to manage, in particular operate and/or control, the building 10 with its several entities 12. Besides the physical entities 12 shown in Fig. 1, the MS 22 may comprise within its building data 63 (see Fig. 3) other categories of entities, namely logical and/or virtual entities, as described herein.

The building 10 may be an existing or old building, where the MS 22 may not be up to date in terms of its capabilities, functions or applications. Or, another system 70 (see Fig. 3), in particular in the form of an application or digital application, may need to be provided, e.g., on top of the MS 22, for a more efficient control of the energy consumption by means of the physical entities 12 of the building 10, in particular from different technical systems requiring large amounts of energy, e.g., HVAC systems, lighting systems, and similar as described herein. Also, or alternatively, the building 10 may need to be modernized, e.g., brought to a new energetic standard, which may require removal, replacement and/or addition of entities 12, for example. In this case, also the MS 22 may need to be updated or another system 70, in particular digital application, to be provided.

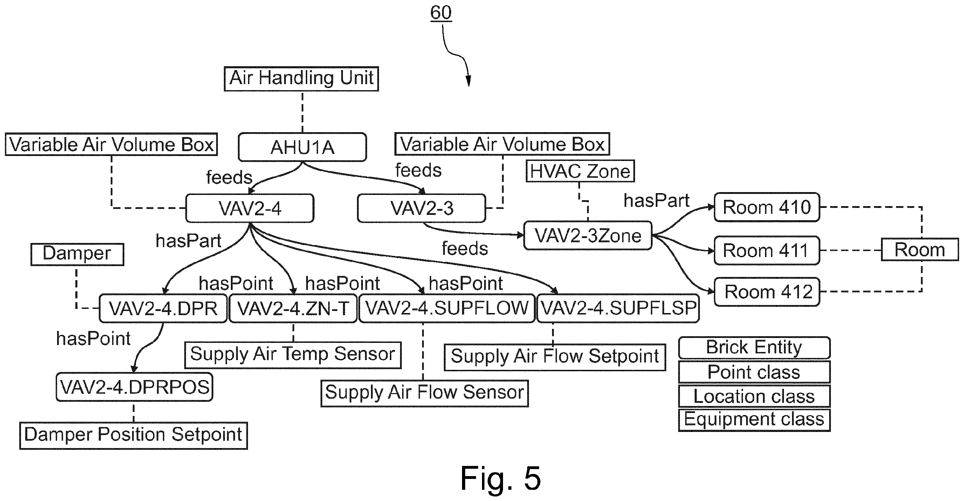

The MS 22 of the building 10 may include building data 63 (see Fig. 3), which may be indicative of or comprise a digital representation of the entities 12 of or for the MS 22 and/or the building 10 as exemplary shown partially in Figure 5. Specifically, Fig. 5 shows a Brick schema in the form of a graph for part of the building 10 and as may be used by a MS 22 or any other system 70 (see Fig. 3), e.g., implemented in software and/or hardware, or application of a system 70, in relation with the operation or control of the building 10, for example. A Brick schema is a standardized graph according to the Brick ontology.

In Figure 5, the Brick schema illustrates the technical information contained in the building data 63 in the form of a digital representation, e.g., physical, virtual and logical characteristics, of the different entities 12 also referred to as Brick entities in Fig. 5 and given natural language names. Different kinds of physical, virtual and logical entities are exemplary shown, e.g., for an HVAC system of the building 10, e.g., inside several rooms, exemplary named Room 410, 411, 412, as spatial entities of the building 10 and inside a Location class, and Sensor or Setpoint entities in a Point class are visualized. For example, the devices or equipment such as the Air Handling Unit, the Variable Air Volume Box, the Variable Volume Box within an Equipment class are shown. The Brick schema shows the relationships, e.g., in terms of location or operational, between the Brick Entities. For example, "feeds" as relationship with arrow from the Air Handling Unit AHU1A to the Variable Air Volume Box VAV2-4 means that AHU1A feeds VAV2-4. For example, "hasPart" as relationship with arrow from the HVAC zone VAV2-3Zone to the Rooms defines the location of VAV2-3Zone in the Rooms, and so on.

Figure 2 schematically shows another data processing system 50, which may comprise one or more data processing apparatuses 30, e.g., computers, two of which are shown for the purpose of example. The data processing system 50, in particular one or both of the data processing apparatuses 30, in particular their processors 32, may be used to carry out the method 100 for obtaining configuration data indicative of a system configuration 66 of a system 70 for the building 10 as schematically illustrated in Fig. 3. Each one of the exemplary two data processing apparatuses 30 comprises at least one processing unit or processor 32, e.g., a CPU, and at least one computer program product 34, e.g., in the form of a computer-readable storage medium. Computer programs 40 are stored on the computer program products 34.

Figure 3 schematically shows one or more computer elements 42, 44 of the computer programs 40 in the data processing system 50, which may form parts of the computer programs 40, e.g., different program code for different functions or steps of the method 100. Specifically, a computer program 40 of one of the data processing apparatuses 30 may be comprising the computer element 44, which may be in the form of one or more software codes or instructions for the processors 32. The computer program product 34 in the form of the storage medium of that data processing apparatus 30 may also comprise one or more of the databases 60, 62 and 64 as shown or that data processing apparatus 30 may at least have access thereto. The other computer program 40 of the other data processing apparatus 30 in the data processing system 50 may comprise the computer element 42. The data processing system 50 may be a distributed computing environment, where, for example, the computer element 44 is executed on a local user data processing apparatus 30, such as any stationary or mobile computer, and the computer element 42 may be executed by a remote or server type of data processing apparatus 30, having increased processing capabilities for processing of the computer element 42. Alternatively, the computer elements 42, 44 may be all provided as part of the same computer program 40 or executed by the same data processing apparatus 30.

For obtaining the configuration data, the method 100 may comprise a step 102, in which the building data 63 of the one or more buildings 10 is obtained, in particular by the data processing apparatus 30 executing the computer element 44. The building data 63 may be directly transmitted by the MS 22 or data processing system 20, for example, or via a storage medium, another data processing apparatus 30, based on user input, and similar, for example. For example, the building data 63 may be stored in the building data storage or database 60, from which it may be retrieved.

Further, in a step 104 of method 100, which may be after step 102 as shown or, alternatively, parallel or before, instruction data 65 comprising one or more instructions for processing the building data 63 by the computer element 42, which may be an AI processing component 44, for obtaining the configuration data 66, may be obtained, in particular by the same data processing apparatus 30 as the one carrying out step 102. The instruction data 65 may for example be based on user input and provided alongside the building data 63. The instruction data 66 may indicate that as result of the processing by the AI processing component 44, configuration data indicative of a system configuration of one of the systems 22, 70 for the building 10 is expected. For example, the instruction data 66 may be configured with an example of the expected result, i.e., an example of the configuration data 66, which may have been previously used or is currently used in the other system 70 or MS 22, for example. Specifically, the instruction data 65 may be configured such that the processing by the AI processing component 44 has the system configuration or its data as a result for or in the form of a digital application, which may be executed by the MS 22 or other system 70 or used thereon, e.g., by being executed by the same data processing apparatus 30 that carries out the steps 102 and 104 of method 100 or any other data processing apparatus 30.

Further, the instruction data 65 may for example comprise one or more instructions in the form of a prompt or, in other words, query. The prompt may be configured such that it instructs the AI processing component 42 to generate the configuration data 66 based on the building data 63 and optionally regulation data 61 as discussed below, wherein the building data 63 may be in the form of the information model, e.g., according to a standard such as the Brick schema or ontology.

Further, in a step 106 of method 100, which may be after step 102 and 104 as shown or, alternatively, parallel or before these, regulation data 61 may be provided alongside the building data 63 and the instruction data 65 to the computer element 42. The regulation data 61 may be indicative of one or more regulations for the building 10. The regulation data 61 may be retrieved from a regulation database 60 as shown in Fig. 3. Step 106 may be performed by the same data processing apparatus 30, which performs the steps 102 and 104.

All, the building data 63, the regulation data 61 and the instruction data 65, may be obtained by or provided to the computer element 42. In a step 108 of method 100, after obtaining the building data 63, the regulation data 61 and the instruction data 65, the data processing apparatus 30 that previously executed the steps 102, 104 and 106, may dispatch or provide these for processing by the AI processing component 42 on another data processing apparatus 30, e.g., one with increased processing capabilities.

The method 100 may optionally comprise a step of processing, by the AI processing component 42, the building data 63, regulation data 61 and instruction data 65 for obtaining the configuration data 66 from the processing by the AI processing component 44.

The AI processing component 42 may be a generative AI processing component 42 based on LLM. Thereby, it may understand, e.g., based on neural network techniques, deep learning techniques, or similar, the content of the building data 63, the regulation data 61 and the instruction data 61 and generate the configuration data 66. For example, the configuration data 66 may be at least partially in the form of computer code or, in other words, program code. When executing this program code, the herein mentioned digital application may be executed. Alternatively, or additionally, for example, parts of the configuration data 66 may be updating an already existing system configuration or program code.

Then, in a step 110 of method 100, the configuration data 66 may be received, e.g., by the data processing apparatus 30 carrying out steps 102, 104, 106 and 108. In particular, the computer element 44, which may be executed by the same data processing apparatus 30 that carries out the steps 102, 104, 106, 108, may be receiving the configuration data 66. The computer element 44 may be an agent or software for configuration management. For example, it may have a user interface, e.g., in the form of a dashboard, for receiving user input for adapting the configuration. For example, the user may validate the configuration data 66 or its system configuration by means of correcting it or providing it again, with one or more instructions including additional information, to the AI processing component 44 for regeneration. Moreover, generally, the generation of the configuration data 66 may be an iterative process requiring user input.

For example, the configuration management computer element 44 may store the obtained configuration data 66 in a system database 64, in particular a digital application database 64, as shown in Fig. 3. Additionally, it can inform the system 70 different from the MS 22, e.g., in the form of a digital application, that a new system configuration is available and should be used by the latter. Alternatively, or additionally, besides storing the newly generated configuration data 66, the computer element 44 may directly send the newly created configuration data 66 to the system 70 in the form of or for execution in the digital application as shown in Fig. 3. In any case, the newly generated configuration data in the system 70, e.g, may be used in a step 112 of method 100 to provide certain capabilities or functions as discussed herein, e.g., for an energy consumption monitoring, energy forecasting, energy optimization, regulation control, or user comfort control.

Furthermore, the computer element 44 may be connected to MS 22. This connection may be used to transfer digital applications that are already (pre-)configured by the computer element 44 to the MS 22 to install them there or to transfer an unconfigured digital application together with corresponding newly generated configuration data 66 to the MS 22, that may configure and install it itself or to transfer the newly generated configuration data 66 only if the MS 22 has its own mechanism for digital applications handling or access to external digital application handling mechanism. Further, as shown, the MS 22 manages, e.g., controls and/or automates, the building 10 with its technical systems or entities 12. Hence, the installed or transferred system 70, e.g, digital application, based on the configuration data 66 may be used alternatively or additionally in step 112 of method 100 to provide new or updated capabilities or functions as discussed herein, e.g., reduced energy consumption of the building 10.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

## Claims

1. A method (100) for obtaining configuration data (66) indicative of a system configuration of a system (22, 70) for one or more buildings (10), the method (100) comprising:
- obtaining building data (63) of the one or more buildings (10);
- obtaining instruction data (65) comprising one or more instructions for processing the building data (63) by an Artificial Intelligence, Al, processing component (44) for obtaining the configuration data (66);
- providing the building data (63) and the instruction data (65) for processing by the AI processing component (44); and
- obtaining the configuration data (66) based on the building data (63) and the instruction data (65) from the processing by the AI processing component (44).

2. The method (100) of claim 1, wherein the building data (63) is indicative of information associated with entities (12) of the one or more buildings (10), wherein the entities (12) are at least one or more of: Heating, Ventilation and/or Air Conditioning, HVAC, entities, lighting entities, electrical entities, spatial entities, sensor entities, and control entities.

3. The method (100) of claim 2, wherein the information associated with the entities (12) relates at least to one or more of: a location of the entities, a type of the entities, a status of the entities, a usage of the entities, a function of the entities, a size of the entities, or a relationship between the entities.

4. The method (100) of any one of the previous claims, wherein the building data (63) is indicative of at least parts of an information model.

5. The method (100) of claims 3 and 4, wherein the information model is indicative of a digital representation of the entities (12) and of the therewith associated information.

6. The method (100) of claim 5, wherein the digital representation is in the form of one or more ontologies.

7. The method (100) of any one of the previous claims, wherein the method (100) further comprises obtaining regulation data (61) indicative of one or more regulations for the one or more buildings (10) and providing it with the building data (63) and the instruction data (65) for processing by the AI processing component (44).

8. The method (100) of any one of the previous claims, wherein the method (100) further comprises using the configuration data (66) for a system configuration of a building management system (22) and/or another system (70) of the one or more buildings (10).

9. The method (100) of claim 8, wherein the other system (70) is a digital application relating to the one or more buildings (10).

10. The method (100) of claim 9, wherein the digital application is configured for at least one of energy consumption monitoring, energy forecasting, energy optimization, regulation control, or user comfort control.

11. The method (100) of any one of the previous claims, wherein the AI processing component (44) is a generative AI processing component based on at least one Large Language Model, LLM.

12. The method (100) of any one of the previous claims, wherein the one or more instructions are in the form of prompts.

13. The method (100) of any one of the previous claims, wherein the system configuration comprises an interface for user access.

14. One or more computer program products (34, 40) comprising instructions which, when executed by one or more data processing apparatuses (30), cause the one or more data processing apparatuses (30) to carry out the method (100) of any one of the previous claims.

15. A data processing system (50) configured to carry out the method (100) of any one of claims 1 to 13.
